# EUROPEAN PATENT SPECIFICATION

(11) **EP 2 055 624 B1**
(45) Date of publication and mention of the grant of the patent: **28.08.2013**
(21) Application number: 08253517.0
(22) Date of filing: 29.10.2008
(51) Int. Cl.: B60K 11/08, F01P 11/10, B62J 17/00

(54) **Vehicle with unit swing engine and radiator**
Fahrzeug mit einem schwenkbaren Motor und einem Kühler
Véhicule avec moteur monté flottant et radiateur

(30) Priority: 30.10.2007 JP 2007281088; 24.01.2008 JP 2008014258
(43) Date of publication of application: 06.05.2009
(60) Divisional application: 12001144.0
(73) Proprietor: Yamaha Hatsudoki Kabushiki Kaisha, Shizuoka-ken Shizuoka 438-8501 (JP)
(72) Inventor: Kurihara, Kouji c/o Yamaha Hatsudoki Kabushiki Kaisha, Shizuoka-ken 438-8501 (JP); Miyoshi, Nobuyuki c/o Yamaha Hatsudoki Kabushiki Kaisha, Shizuoka-ken 438-8501 (JP); Kawakami, Satoshi c/o Yamaha Hatsudoki Kabushiki Kaisha, Shizuoka-ken 438-8501 (JP)
(74) Representative: Moreland, David

(56) References cited:
- JP-A- 2005 119 607
- US-A- 4 237 996
- US-A1- 2002 083 910

## Description

### FIELD OF THE INVENTION

The present invention relates to a vehicle, more particularly to a vehicle provided with a radiator.

### BACKGROUND TO THE INVENTION

Vehicles provided with a radiator are known. The genericJP-A-2005-119607 discloses a scooter type motorcycle including a rear frame, an engine attached to the rear frame, a radiator attached to the engine on a side thereof, and a hose having an end connected to the radiator. The hose connected to the radiator of the scooter type motorcycle is, although not specifically described, retained by a retaining unit provided on the frame and a body.

However, although not specifically described, because the scooter type motorcycle disclosed in JP-A-2005-119607 is likely to be a unit swing engine that swings up and down relative to the frame, the hose connected to the radiator is expected to swing up and down when the engine swings. In this case, the swinging of the hose can undesirably cause the hose to interfere with another component.

The present invention has been made to solve or alleviate the problem described above, and an object of the invention is to provide a vehicle capable of preventing a hose from interfering with another component, even when a unit swing engine swings.

### SUMMARY OF THE INVENTION

According to a first aspect of the present invention there is provided a vehicle comprising:
a frame forming part of a vehicle body;
a unit swing engine pivotally attached to the frame;
a radiator for cooling the unit swing engine;
a radiator cover disposed so as to cover the radiator;
a hose having one end connected to the radiator; and
a first retainer provided on the radiator cover and adapted to retain the hose.

The first retainer and the radiator cover may be integrally formed.

A plurality of first retainers may be provided. The plurality of first retainers may be disposed at staggered positions with respect to a direction along which the hose extends.

The plurality of first retainers may be constructed so as to retain the hose by sandwiching the hose therebetween.

The first retainer may have a shape of a hook having a hook portion at an upper part thereof. The hose may be retained in a state of being restrained in vertical movement by the hook portion of the first retainer and the radiator cover.

The vehicle may further comprise a second retainer provided on the frame, the second retainer retaining the hose at a position different from that of the first retainer.

The second retainer may be constructed so as to movably retain the hose.

The second retainer may be constructed so as to restrain movement of the hose in a vehicle width direction.

The second retainer may be provided in a vicinity of the engine and may be constructed so as to restrain movement of the hose in a direction toward the engine.

The vehicle may further comprise a footrest disposed in front of the unit swing engine for supporting feet of a user placed thereon and extending in a fore-and-aft direction. The vehicle may further comprise a sub tank disposed in a vicinity of a front end of the footrest, connected to the other end of the hose, one end of which is connected to the radiator, and receiving coolant flowing thereinto from the radiator through the hose.

The frame may extend downward and rearward and may include a lower frame having an upper section and a lower section. The sub tank may be disposed forward of the lower section of the lower frame.

The lower section of the lower frame may have a first portion disposed below the footrest and a second portion connected to the first portion, the second portion extending upward and forward from the first portion and connected to the upper section of the lower frame. The sub tank may be disposed in a vicinity of the second portion of the lower frame.

According to a second aspect of the present invention there is provided a radiator cover for covering a radiator mounted on a vehicle, said radiator for cooling a unit swing engine which is pivotally mounted on a vehicle frame, said cover comprising a first retainer adapted to retain a hose having one end connected to the radiator.

According to a third aspect of the present invention, a vehicle includes a frame forming a vehicle body, a rear wheel, a unit swing engine attached to the frame at a position forward of the rear wheel and swings along with the rear wheel, a radiator for cooling the unit swing engine, a radiator cover disposed so as to cover the radiator, a hose having one end connected to the radiator, and a first retainer provided on the radiator cover to retain the hose.

As described above, the vehicle includes the radiator cover disposed so as to cover the radiator, the hose having the one end connected to the radiator, and the first retainer provided on the radiator cover to retain the hose. Accordingly, the hose can be retained by the first retainer provided on the radiator cover that swings up and down with the unit swing engine. Hence, when the unit swing engine swings up and down, a portion of the hose ranging from a joint between the radiator and the hose to the first retainer swings up and down integrally with the radiator and the radiator cover. Consequently, the hose can be restrained from interfering with a component surrounding the radiator cover even when the unit swing engine swings up and down.

### BRIEF DESCRIPTION OF THE DRAWINGS

These and other aspects of the present invention will now be described, by way of example only, with reference to the accompanying drawings, in which:
FIG. 1 is a side view of an entire structure of a motorcycle according to a first embodiment of the present invention;
FIG. 2 is an explanatory cross-sectional view of a structure of a radiator and its surroundings of the motorcycle according to the first embodiment shown in FIG. 1;
FIG. 3 is an explanatory front view of a structure of a radiator cover of the motorcycle according to the first embodiment shown in FIG. 1;
FIG. 4 is an explanatory plan view of the structure of the radiator cover of the motorcycle according to the first embodiment shown in FIG. 1;
FIG. 5 is an explanatory perspective view of the structure of the radiator cover of the motorcycle according to the first embodiment shown in FIG. 1;
FIG. 6 is a cross-sectional view taken along the line 100-100 of FIG. 3;
FIG. 7 is a cross-sectional view taken along the line 200-200 of FIG. 3;
FIG. 8 is an explanatory rear view of the structure of the radiator cover of the motorcycle according to the first embodiment shown in FIG. 1;
FIG. 9 is an explanatory perspective view of the structure of the radiator cover of the motorcycle according to the first embodiment shown in FIG. 1;
FIG. 10 is a side view of an entire structure of a motorcycle according to a second embodiment of the present invention;
FIG. 11 is a side view for explaining a mechanism for retaining a hose and a structure of a recovery tank of the motorcycle according to the second embodiment shown in FIG. 10;
FIG. 12 is an explanatory front view of the structure of recovery tank of the motorcycle according to the second embodiment shown in FIG. 10; and
FIG. 13 is a cross-sectional view taken along the line 300-300 of FIG. 11.

### DETAILED DESCRIPTION OF THE DRAWINGS

### First Embodiment

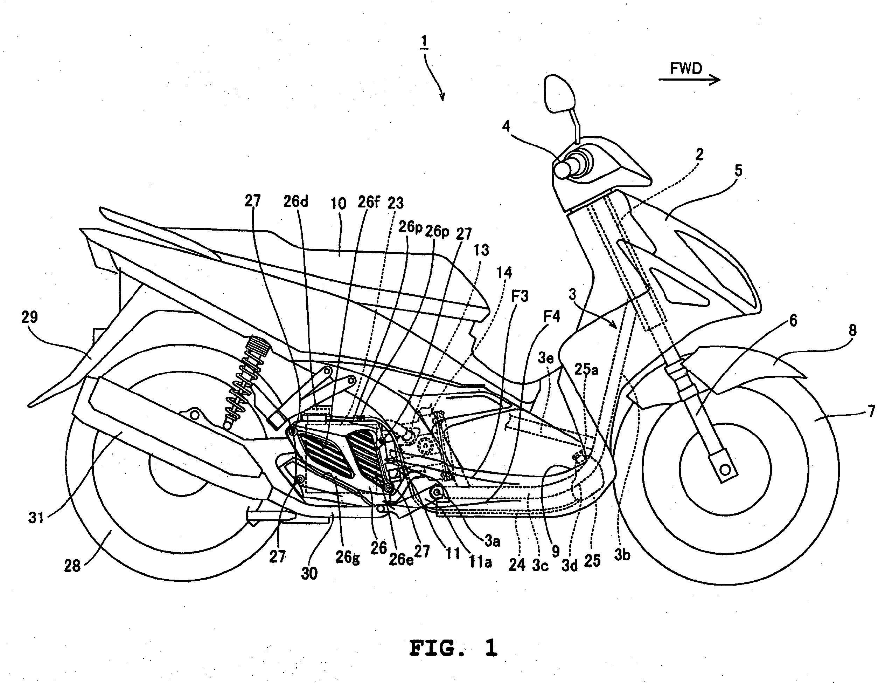

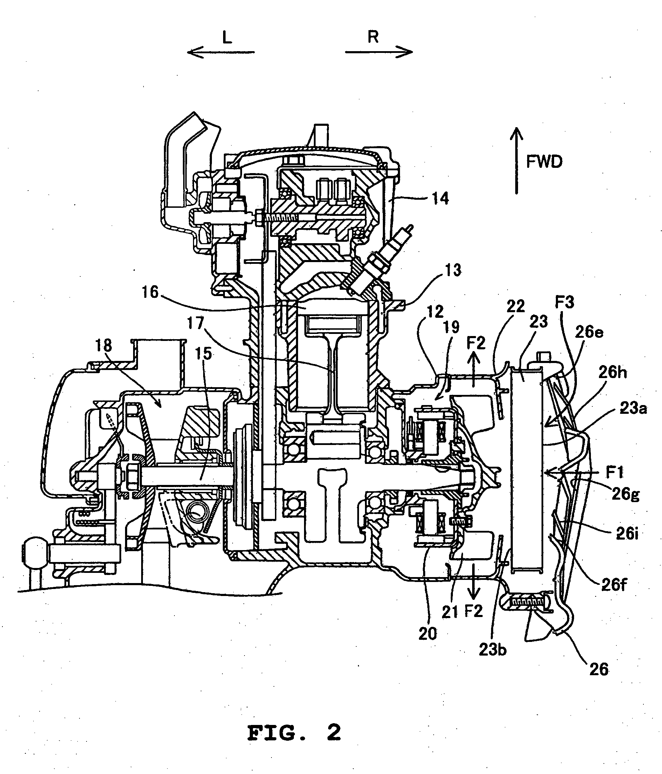

FIG. 1 is a side view of an entire structure of a motorcycle according to a first embodiment of the present invention. FIGs. 2 to 9 are explanatory views of structures of a radiator cover and its surroundings of the motorcycle according to the first embodiment shown in FIG. 1. In the first embodiment, a scooter-type motorcycle will be described as an example of a vehicle according to the present invention. A direction indicated by arrow FWD is a forward direction of the motorcycle in each drawing. The structure of a motorcycle 1 according to the first embodiment of the present invention will be described in detail with reference to FIGs. 1 to 9.

As shown in FIG. 1, a main frame 3 of the motorcycle 1 is fixed to a lower portion of a head pipe 2. The main frame 3 includes: a main pipe 3b extending downward; a bottom tube 3c disposed below a footrest 9, which will be described later, and extending in a fore-and-aft direction; a curved section 3d formed to rise upward and forward from the bottom tube 3c toward the main pipe 3b; and a seat rail 3e extending upward and rearward from a lower portion of the main pipe 3b. The main frame 3 is an example of a "lower frame" of the present invention, and the main pipe 3b is an example of an "upper section of the lower frame" of the invention. The bottom tube 3c is an example of a "lower section of the lower frame" and a "first portion" of the present invention, and the curved section 3d is an example of a "lower section of the lower frame" and a "second portion" of the present invention. A body frame is formed with the head pipe 2, the main frame 3, the seat rail 3e, a side member (not shown), and the like.

Handlebars 4 are rotatably attached to an upper portion of the head pipe 2. A front cowling 5 is disposed in front of the head pipe 2 to cover a front portion of the head pipe 2. A plurality of front forks 6 having a suspension for absorbing vertical shocks are disposed below the head pipe 2. A front wheel 7 is rotatably attached to lower portions of the plurality of front forks 6. A front fender 8 is disposed above the front wheel 7.

The footrest 9, on which a user's feet are to be placed and which is of a foot board type, is disposed on a top side of a center portion of the bottom tube 3c. The footrest 9 is positioned so as to extend in the fore-and-aft direction. The footrest 9 is an example of a "footrest" of the present invention. A seat 10 is disposed above a rear portion of the seat rail 3e. A unit swing engine 11 is disposed below the rear portion of the seat rail 3e. Specifically, a pivot shaft 3a is provided on a rear portion of the bottom tube 3d. The unit swing engine 11 is attached to the pivot shaft 3a with an arm member 11a therebetween to be pivotable on the pivot shaft 3a. More specifically, the unit swing engine 11 is constructed so as to hold a rear wheel 28, which will be described later, provided at a rear portion of the unit swing engine 11 such that the rear wheel 28 can swing about the pivot shaft 3a. As shown in FIG. 2, the unit swing engine 11 includes: a crankcase 12; a cylinder 13 attached to a forward (the direction indicated by arrow FWD) portion of the crankcase 12; and a cylinder head 14 attached to the cylinder 13 so as to seal a forward (the direction indicated by arrow FWD) opening of the cylinder 13.

A crankshaft 15 is rotatably disposed in the crankcase 12 such that the crankshaft 15 extends in a vehicle width direction (the direction indicated by arrows L and R). A connecting rod 17 for connecting a piston 16 placed in the cylinder 13 and the crankshaft 15 together is attached to the crankshaft 15. A transmission mechanism 18 is disposed on the crankshaft 15 on the side indicated by arrow L. A generator mechanism 19 is disposed on the crankshaft 15 on the side indicated by arrow R. The generator mechanism 19 includes a rotor 20 that rotates with the crankshaft 15. The rotor 20 is attached to an end portion of the crankshaft 15 on the side indicated by arrow R. A suction fan 21 that rotates with the rotor 20 on a rotary shaft of the rotor 20 is provided on the rotor 20. The suction fan 21 rotates with the rotor 20 as the crankshaft 15 rotates, thereby primarily introducing air through a rear air inlet 26f, which will be described later, in a direction indicated by arrow F1 and simultaneously causing the air to flow in radial directions, indicated by arrows F2, of the suction fan 21.

A fan casing 22 made of aluminum is attached to the crankcase 12 on the side indicated by arrow R so as to cover the suction fan 21. A radiator 23 is attached to the fan casing 22 on the side indicated by arrow R. Specifically, the radiator 23 is disposed such that a core surface 23a faces in the direction indicated by arrow R (a lateral direction of the vehicle) and a surface portion 23b, which is on the side opposite from the core surface 23a, opposes the suction fan 21. Accordingly, the radiator 23 is positioned such that the direction (the direction indicated by arrow F1), along which the air is flown by the suction fan 21, is generally perpendicular to the core surface 23a. Because the radiator 23 is attached to the unit swing engine 11, when the unit swing engine 11 swings up and down, the radiator 23 swings up and down along therewith.

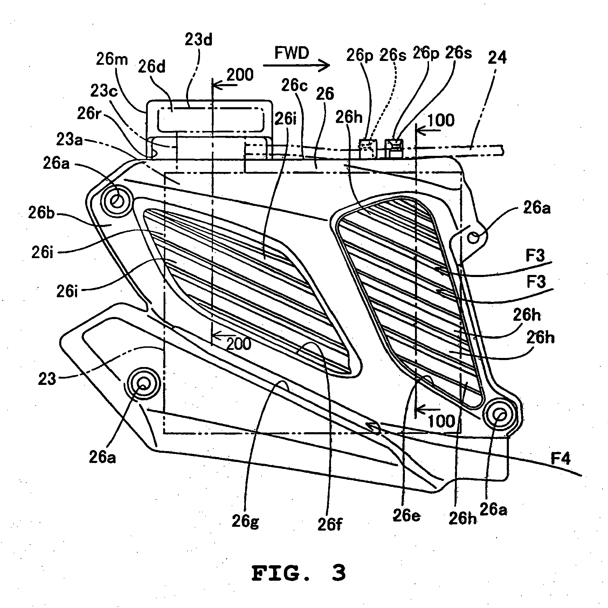

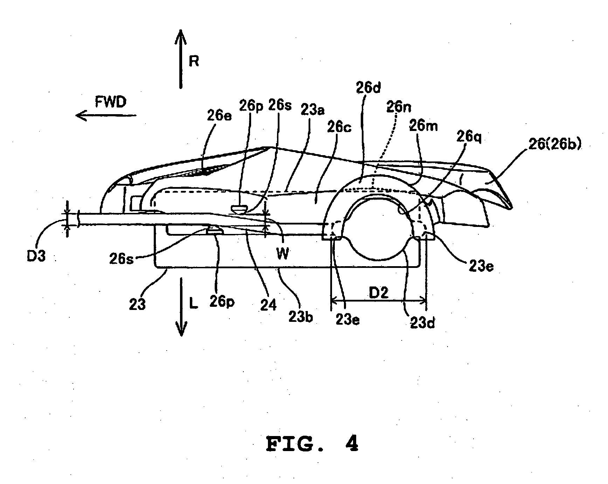

As shown in FIGs. 3 and 4, a coolant supply unit 23c, through which coolant is filled into the radiator 23, is provided on the radiator 23 above the core surface 23a. A cap 23d, which has an out-of-round or non-round shape, is attached to the coolant supply unit 23c. As shown in FIG. 4, two projections 23e each projecting outward in a radial direction of the cap 23d as viewed from above the radiator 23 are formed on the cap 23d.

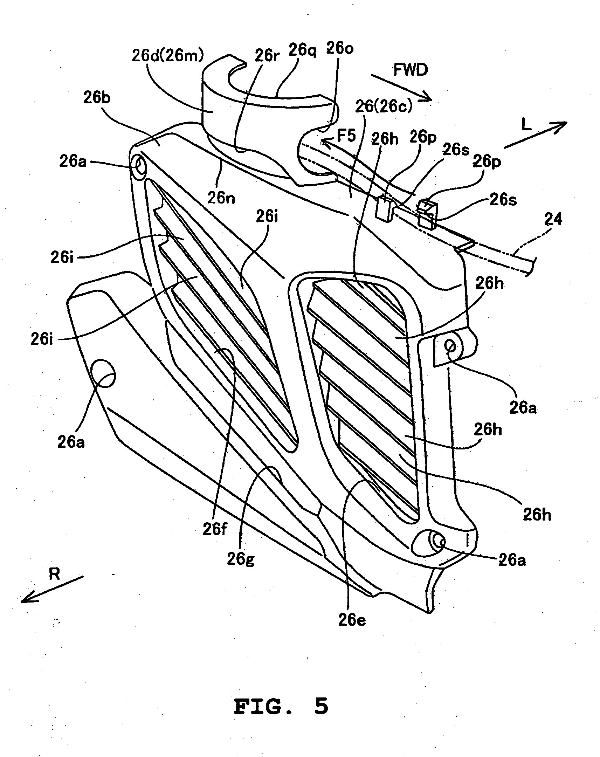

As shown in FIGs. 3 and 4, in the first embodiment, one end of a hose 24, through which coolant inside the radiator 23 can flow, is attached to a portion of the coolant supply unit 23c on the side indicated by arrow FWD. As shown in FIG. 4, the hose 24 has an outer diameter D3 (approximately 9 millimeters). As shown in FIG. 1, the hose 24 is disposed so as to extend from the radiator 23 in the direction indicated by arrow FWD. The other end of the hose 24 is connected to a recovery tank 25 provided in the vicinity of the front end of the footrest 9. This structure allows the coolant inside the radiator 23 to be transferred to the recovery tank 25 through the hose 24 even when the coolant is heated to a high temperature and hence increased in volume. The recovery tank 25 may therefore function as an expansion tank. The recovery tank 25 is an example of the "sub tank" of the present invention. The recovery tank 25 is disposed forward of the bottom tube 3c and in the vicinity of the curved section 3d. Specifically, the recovery tank 25 is positioned such that a front portion of the recovery tank 25 is farther forward than the front end of the curved section 3d and part of a rear portion of the recovery tank 25 is farther aft than the curved section 3d. The recovery tank 25 is disposed inside the footrest 9. The recovery tank 25 has, in an upper portion thereof, a coolant supply port 25a, through which maintenance operations, such as supply of the coolant, are performed by an operator. As shown in FIG. 5, the hose 24 is also positioned so as to extend out of the radiator cover 26 through a notch 26o defined in a radiator cover 26, which will be described later, to thus be guided to the recovery tank 25 while being held by a plurality of hose holding claws 26p, which will be described later.

As shown in FIGs. 2 and 4, the radiator cover 26, which may be made of a resin, is disposed on the side indicated by arrow R of the core surface 23a of the radiator 23 so as to cover an outer side (the side indicated by arrow R) of the core surface 23a. As shown in FIGs. 3 and 5, four screw holes 26a are defined in the radiator cover 26. The radiator cover 26 is attached to the fan casing 22 with screws 27 (see FIG. 1).

The radiator cover 26 includes a body cover 26b and a cap cover 26d. The body cover 26b covers the outer side (the side indicated by arrow R) of the core surface 23a of the radiator 23. The cap cover 26d is disposed on a top surface 26c of the body cover 26b so as to cover the cap 23d of the radiator 23.

The body cover 26b has a front air inlet 26e, the rear air inlet 26f, and a bottom air inlet 26g. The front air inlet 26e, the rear air inlet 26f, and the bottom air inlet 26g are each formed so as to oppose the core surface 23a of the radiator 23 (see FIG. 4) and have openings directed in different directions.

The front air inlet 26e has the opening on a forward (the direction indicated by arrow FWD) side and is formed to take at least a portion of running wind F3 (see FIGs. 1 and 3) thereinto. Specifically, the front air inlet 26e is provided on the front side (the side indicated by arrow FWD) of the radiator cover 26 so as to be open in a direction tilted toward the forward side (the side indicated by arrow FWD) at a predetermined angle with respect to the vehicle width direction (the direction indicated by arrows L and R) (see FIG. 3). As shown in FIG. 4, the front air inlet 26e is placed so as to oppose a forward (the direction indicated by arrow FWD) portion of the core surface 23a of the radiator 23, and has a function of guiding air (the running wind F3) to the forward (the direction indicated by arrow FWD) portion of the core surface 23a.

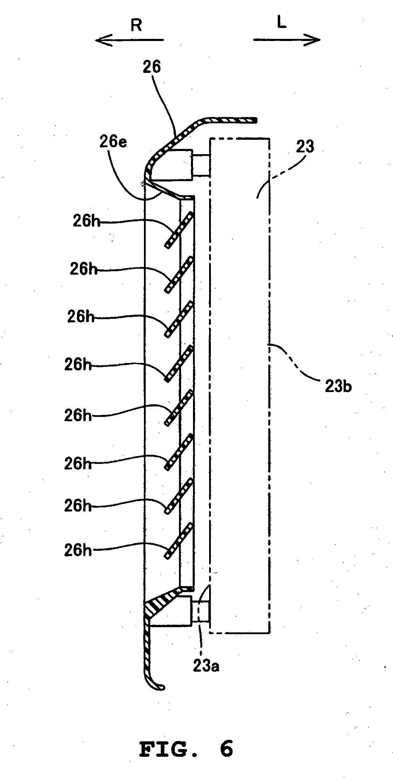

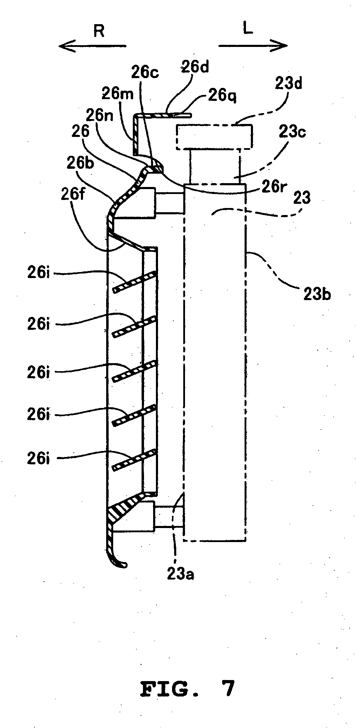

A plurality of plate-like members (fins) 26h are provided on the front air inlet 26e integrally with the radiator cover 26. The plurality of plate-like members 26h are disposed to extend obliquely rearward and upward from a front side of the opening of the front air inlet 26e and not to overlap with one another from a perspective of facing the rear air inlet 26e(26f). Each of the plurality of plate-like members 26h is formed to have a predetermined tilt angle with respect to the core surface 23a. As shown in FIGs. 6 and 7, each of the plurality of plate-like members 26h (see FIG. 6) is disposed such that the predetermined tilt angle of the plate-like members 26h is smaller than a predetermined tilt angle of plate-like members 26i of the rear air inlet 26f (see FIG. 7), which will be described later, with respect to the core surface 23a. That is, the plate-like members 26h (see FIG. 6) of the front air inlet 26e are disposed such that mud and the like less easily enter the inside (the side indicated by arrow L) of the radiator cover 26 therethrough than through the plate-like members 26i (see FIG. 7) of the rear air inlet 26f.

As shown in FIGs. 3 and 5, the rear air inlet 26f has the opening on the side opposite from the forward (the direction indicated by arrow FWD) side and is formed to take in the suction draft F1 (see FIG. 2) sucked by the suction fan 21 (see FIG. 2). Specifically, as shown in FIGs. 2 and 5, the rear air inlet 26f is provided on the rear side of the radiator cover 26 so as to be open in a direction tilted toward the side opposite from the forward (the direction indicated by arrow FWD) side at a predetermined angle with respect to the vehicle width direction (the direction indicated by arrows L and R).

As shown in FIGs. 3 and 5, the plurality of plate-like members (fins) 26i are provided in the rear air inlet 26f integrally with the radiator cover 26. The plurality of plate-like members 26i are disposed to extend obliquely rearward and upward from a front side of the opening of the rear air inlet 26f and not to overlap with one another when viewed as a plane. Each of the plurality of plate-like members 26i is formed to have the predetermined tilt angle with respect to the core surface 23a. As shown in FIGs. 6 and 7, each of the plurality of plate-like members 26i (see FIG. 7) is disposed such that the predetermined tilt angle of the plate-like members 26i is greater than the predetermined tilt angle of the plate-like members 26h (see FIG. 6) of the front air inlet 26e with respect to the core surface 23a. That is, the plate-like members 26i (see FIG. 7) of the rear air inlet 26f are disposed such that air flows into the inside (the side indicated by arrow L) of the radiator cover 26 more easily therethrough than through the plate-like members 26h (see FIG. 6) of the front air inlet 26e.

As shown in FIGs. 1 and 3, the bottom air inlet 26g has the opening directed in a direction, along which at least a portion of running wind F4 (see FIG. 1) below the front air inlet 26e can be taken into an area below the rear air inlet 26f. The bottom air inlet 26g is formed to extend obliquely forward (the direction indicated by arrow FWD) and downward.

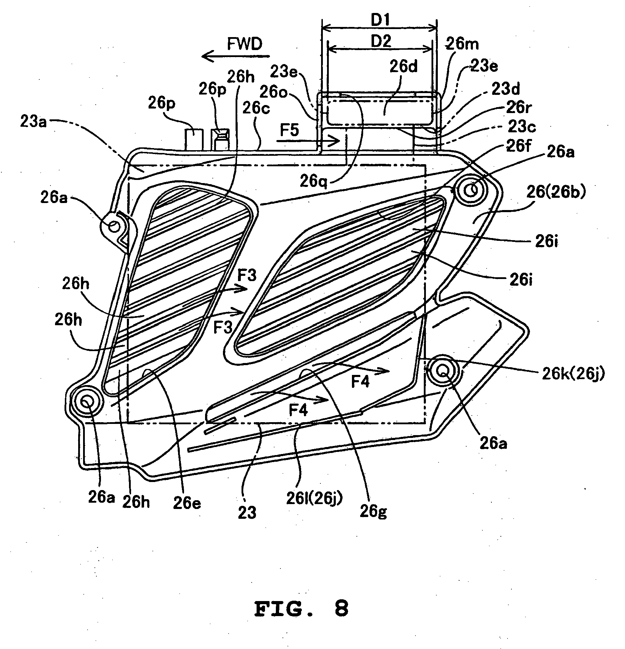

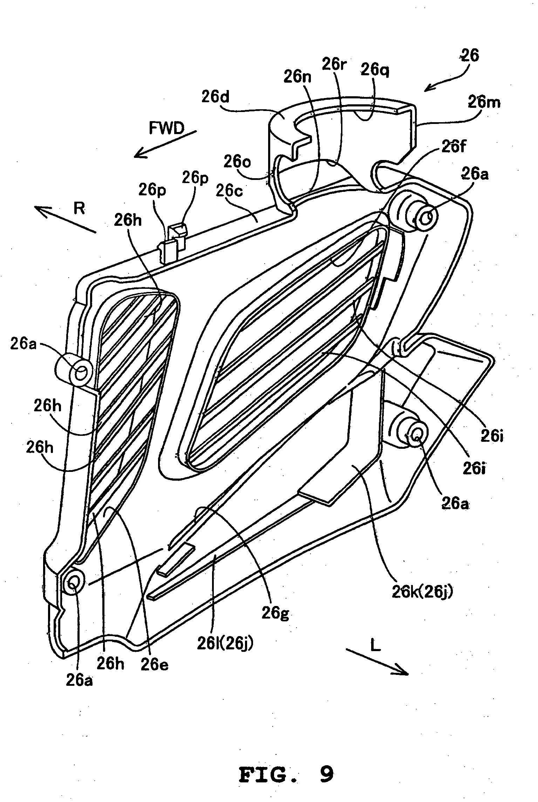

As shown in FIGs. 8 and 9, an air guide unit 26j is formed on the back surface side (the side indicated by arrow L) (see FIG. 9) of the radiator cover 26 integrally therewith. The air guide unit 26j is formed to guide air introduced through the bottom air inlet 26g to a lower area of the core surface 23a (see FIG. 8) of the radiator 23. The air guide unit 26j is disposed on the back surface side (the side indicated by arrow L) (see FIG. 9) of the radiator cover 26 to project therefrom and includes a rear air guide 26k and a bottom air guide 261. The rear air guide 26k extends downward from the vicinity of the rear end of the bottom air inlet 26g. The bottom air guide 261 is connected with the bottom end of the rear air guide 26k and extends obliquely forward (in the direction indicated by arrow FWD) and downward. The rear air guide 26k has a function of inhibiting the air (the running air F4) (see FIG. 8) having been introduced through the bottom air inlet 26g from escaping rearward and simultaneously guiding the air to a portion opposite from a forward (the direction indicated by arrow FWD) side in the lower area of the radiator 23 (see FIG. 8). The bottom air guide 261 has a function of inhibiting the air (the running air F4) (see FIG. 8) having been introduced through the bottom air inlet 26g from escaping downward and simultaneously guiding the air to a portion opposite from the forward (the direction indicated by arrow FWD) side in the lower area of the radiator 23 (see FIG. 8).

As shown in FIGs. 3 and 5, a side wall 26m is provided on the cap cover 26d, which is formed on the top surface 26c of the body cover 26b, to cover a side portion of the cap 23d (see FIG. 3). The side wall 26m is formed to extend vertically downward from a lateral vicinity of the cap 23d (see FIG. 3) to the top surface 26c of the body cover 26b. As shown in FIG. 4, the side wall 26m projects to the outer side (the side indicated by arrow R) of an outermost portion 26n of the top surface 26c of the body cover 26b as viewed from above.

As shown in FIGs. 4 and 8, the side wall 26m of the cap cover 26d is constructed such that an inner diameter D1 (see FIG. 8) of the inner circumferential surface of the side wall 26m (the cap cover 26d) is greater than a distance D2 between opposite ends of the two projections 23e, which is a maximum outer diameter of the outer periphery of the cap 23d. That is, the cap cover 26d is constructed not to come into contact with the cap 23d even when the cap 23d is rotated relative to the coolant supply unit 23c.

As shown in FIGs. 3 and 4, the side wall 26m of the cap cover 26d has a semicylindrical shape and is constructed to cover the coolant supply unit 23c and the cap 23d of the radiator 23 from the side indicated by arrow R. As shown in FIG. 5, the semicircular notch 26o is defined in a front (the side indicated by arrow FWD) portion of the side wall 26m of the cap cover 26d. The notch 26o is defined by cutting the side wall 26m on the side indicated by arrow L to open so that running wind F5 flowing from the forward side (the side indicated by arrow FWD) flows into the inside of the cap cover 26d. That is, as shown in FIG. 8, the notch 26o is provided to cause the running wind F5 to impinge on the vicinity of the coolant supply unit 23c of the radiator 23, thereby cooling the vicinity of the coolant supply unit 23c.

As shown in FIG. 5, the notch 26o is constructed to allow the hose 24 connected to the coolant supply unit 23c, on the side indicated by arrow FWD, of the radiator 23 to extend from the inside of the radiator cover 26 to the outside of the same therethrough.

In the first embodiment, as shown in FIG. 5, the plurality of hose holding claws 26p are formed on the top surface 26c on the side, with respect to the notch 26o, indicated by arrow FWD, integrally with the radiator cover 26 to project upward from the top surface 26c. The plurality of hose holding claws 26p guide the hose 24 in the direction indicated by arrow FWD and simultaneously retain the hose 24. As shown in FIG. 4, the plurality of hose holding claws 26p are disposed to have a predetermined clearance therebetween in the fore-and-aft direction. The plurality of hose holding claws 26p are positioned spaced from each other by a clearance W (approximately 7 millimeters), which is slightly smaller than the outer diameter D3 (approximately 9 millimeters) of the hose 24, with respect to a lateral direction (the direction indicated by arrows R and L), thereby sandwiching the hose 24 therebetween. By virtue of this construction, the hose 24 extending in the fore-and-aft direction can be restrained in lateral (the direction indicated by arrows R and L in FIG. 4) movement. As shown in FIGs. 3 and 5, each of the plurality of hose holding claws 26p has the shape of a hook having a hook portion 26s at the upper part. By being sandwiched between the hook portion 26s and the top surface 26c of the radiator cover 26, the hose 24 is retained in a state of being restrained in vertical movement. The hose holding claw 26p is an example of a "first retainer" of the present invention.

A semicircular notch 26q is defined in an upper surface of the cap cover 26d of the radiator 26 so as to correspond to an upper surface of the cap 23d of the radiator 23. The notch 26q is defined by cutting the side indicated by arrow L of the upper surface of the cap cover 26d to open.

The radiator cover 26 has a through hole 26r in the vicinity of the boundary between the body cover 26b and the cap cover 26d. The through hole 26r extends through the radiator cover 26 from the side of the radiator 23 (the side indicated by arrow L) to the outer (the side indicated by arrow R) surface of the cap cover 26d. Specifically, the through hole 26r is defined in the boundary between the side wall 26m and the top surface 26c of the body cover 26b to extend in a circumferential direction of the side wall 26m. As shown in FIG. 3, a width of the through hole 26r in the fore-and-aft direction is greater than a width (outer diameter) of the coolant supply unit 23c of the radiator 23. The side wall 26m is vertically positioned to correspond to the coolant supply unit 23c of the radiator 23.

As described above, the rear wheel 28 is rotatably disposed at the rear portion of the unit swing engine 11. A rear fender 29 is provided above the rear wheel 28 to cover the rear wheel 28 from above. Furthermore, an exhaust pipe 30 is connected to the unit swing engine 11. The exhaust pipe 30 is disposed to extend rearward and coupled with a muffler 31.

In the first embodiment, as described above, there are provided the radiator cover 26 disposed to cover the radiator 23, the hose 24 connected at the one end to the radiator 23, and the hose holding claws 26p disposed on the radiator cover 26 to retain the hose 24. Accordingly, the hose 24 can be retained by the hose holding claws 26p provided on the radiator cover 26 that swings up and down along with the unit swing engine 11. Hence, even when the unit swing engine 11 swings up and down, a portion of the hose 24 ranging from a joint between the radiator 23 and the hose 24 to the hose holding claws 26p swings up and down integrally with the radiator 23 and the radiator cover 26. Consequently, the hose 24 is restrained from interfering with a component surrounding the radiator cover 26 even when the unit swing engine 11 swings.

In the first embodiment, as described above, because the hose holding claws 26p and the radiator cover 26 are formed in one unit, the need of providing another component for retaining the hose 24 is eliminated. Hence, an increase in the number of parts can be suppressed.

In the first embodiment, as described above, the plurality of hose holding claws 26p are disposed at staggered positions with respect to the fore-and-aft direction, along which the hose 24 extends. Accordingly, the hose 24 can be retained without being routed through the plurality of hose holding claws 26p disposed with the clearance W, which is smaller than the outer diameter D3 of the hose 24, therebetween in the vehicle width direction. Hence, the load placed on an operator in retaining the hose 24 with the plurality of hose holding claws 26p can be reduced.

In the first embodiment, as described above, the plurality of hose holding claws 26p are constructed to sandwich the hose 24 therebetween in the vehicle width direction. Accordingly, movement of the hose 24 in the vehicle width direction can be restrained easily using the plurality of hose holding claws 26p.

In the first embodiment, as described above, each of the plurality of hose holding claws 26p has the shape of a hook having the hook portion 26s at the upper part. The hose 24 is retained by the hook portions 26s of the hose holding claws 26p and the top surface 26c of the radiator cover 26 while being restrained in vertical movement. Hence, because the hose 24 is sandwiched from above and below by the hose holding claws 26p and the top surface 26c of the radiator cover 26, the hose 24 can be retained easily while being restrained in vertical movement.

In the first embodiment, as described above, the recovery tank 25, to which the other end of the hose 24 is connected, is provided in the vicinity of the front end of the footrest 9. Accordingly, the recovery tank 25 can be positioned away from the unit swing engine 11, which is a heat generator. By virtue of this structure, undesirable heating of coolant stored in the recovery tank 25 by heat produced by the unit swing engine 11 is inhibited.

In the first embodiment, as described above, because the recovery tank 25 is positioned in the vicinity of the curved section 3d, which is formed to rise upward and forward from the bottom tube 3c, the recovery tank 25 can be vertically positioned to be higher than in an arrangement in which the recovery tank 25 is disposed at a lower portion of the bottom tube 3c. Accordingly, undesirable hitting of mud, sands, and the like thrown up by the wheels onto the recovery tank 25 during running of the vehicle is prevented. Furthermore, because the coolant supply port 25a of the recovery tank 25 can be disposed at a high position, maintainability related to coolant supply and the like can be improved.

### Second Embodiment

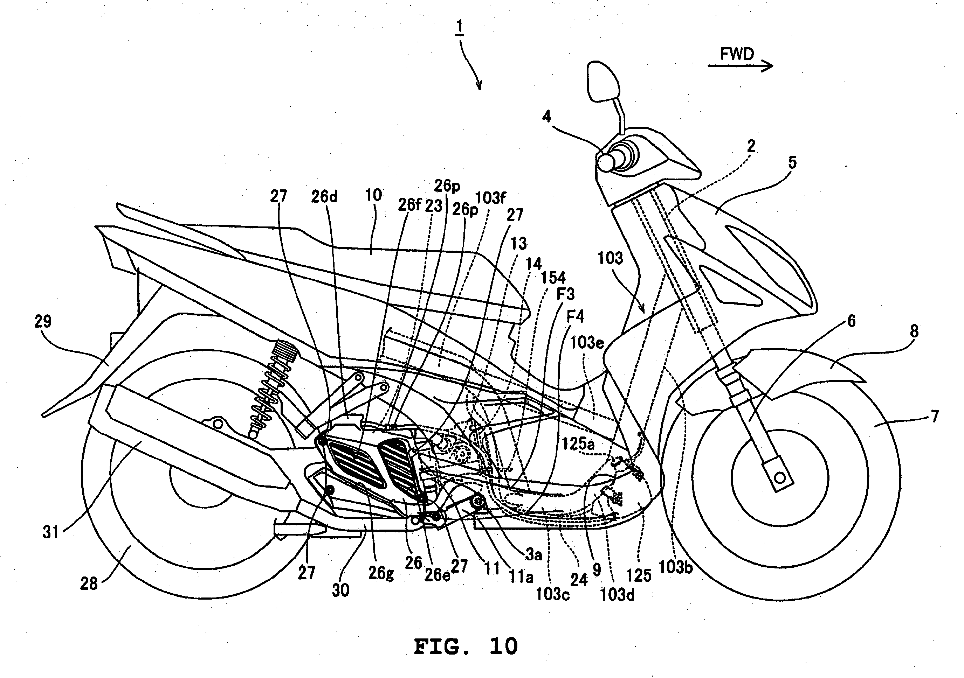

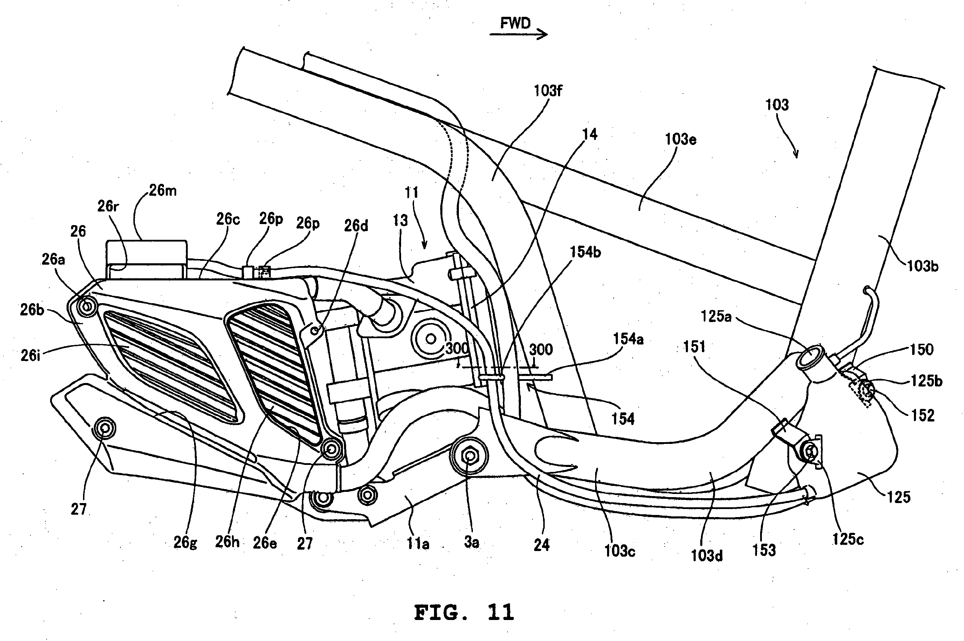

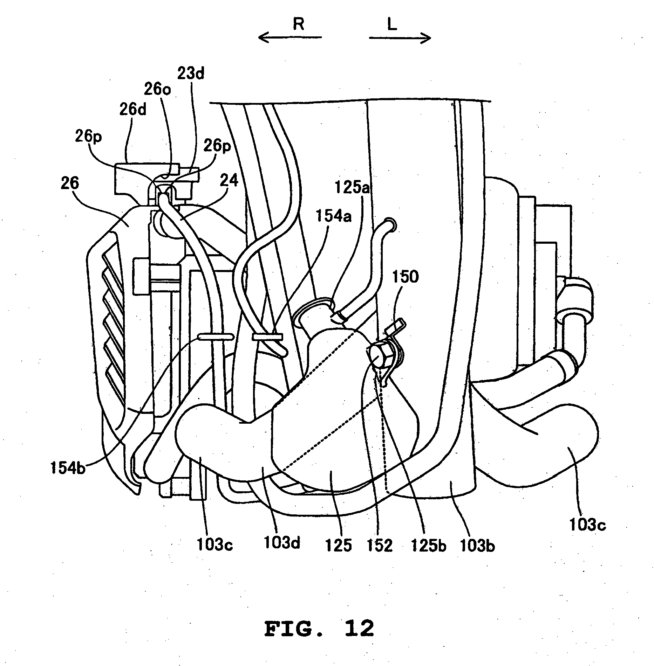

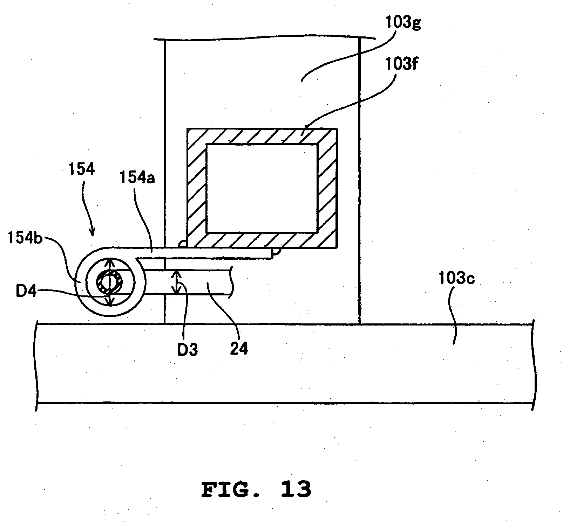

FIG. 10 is a side view of an entire structure of a motorcycle according to a second embodiment of the present invention. FIGs. 11 and 12 are explanatory views of an arrangement of a recovery tank and the hose of the motorcycle shown in FIG. 10. FIG. 13 is an explanatory cross-sectional view of a structure of a retaining member of the motorcycle shown in FIG. 10. The arrangement of the recovery tank and the hose according to the second embodiment of the invention will be explained in detail with reference to FIGs. 10 to 13. In the second embodiment, in contrast to the first embodiment, examples in which a recovery tank 125 is disposed farther forward than a curved section 103d of a main frame 103 and in which the hose 24 is retained by a retaining member 154 will be described.

In the second embodiment, as shown in FIGs. 10 and 11, the main frame 103 has a main pipe 103b and a bottom tube 103c disposed below the footrest 9. The curved section 103d, which is formed to rise upward and forward toward the main pipe 103b, extends forward from the bottom tube 103c. The main frame 103 has a seat rail 103e and a rear frame 103f. The seat rail 103e is attached to a lower portion of the main pipe 103b and extends upward and rearward. The rear frame 103f is attached to a rear portion of the bottom tube 103c with a side member 103g (see FIG. 13) extending in the vehicle width direction therebetween and extends upward and then rearward. A support 150 containing a bolt hole is welded to the main pipe 103b. A support 151 containing a bolt hole is welded to the curved section 103d. The supports 150 and 151 are provided to attach the recovery tank 125 to the main pipe 103b and to the curved section 103d.

In the second embodiment, two flanges 125b and 125c, each containing a bolt hole, are provided on the recovery tank 125 integrally therewith. A bolt 152 is inserted through the flange 125b of the recovery tank 125 and the bolt hole in the support 150, and then a nut, which is not shown, is screwed onto the bolt 152 from a backside (the side of the support 150). Hence, the flange 125b and the support 150 are fastened together, thereby retaining the flange 125b onto the support 150. Similarly, a bolt 153 is inserted through the flange 125c of the recovery tank 125 and the bolt hole in the support 151, and then a nut, which is not shown, is screwed onto the bolt 153 from a backside (the side of the support 151). Hence, the flange 125c and the support 151 are fastened together, thereby retaining the flange 125c onto the support 151. The recovery tank 125 is thus attached to the main pipe 103b and the curved section 103d.

As shown in FIGs. 11 and 12, the recovery tank 125 is disposed farther forward than the main pipe 103b and the curved section 103d. The recovery tank 125 is positioned such that a coolant supply port 125a, provided on the upper end thereof, is positioned in the vicinity of the upper end of the curved section 130d.

In the second embodiment, as shown in FIGs. 11 and 13, the retaining member 154 is welded to the lower portion of the rear frame 103f in the vicinity of the front end of the unit swing engine 11. The retaining member 154 retains the hose 24 to the rear frame 103f at a position below and farther forward than the plurality of hose holding claws 26p (see FIG. 11). The retaining member 154 is an example of the "second retainer" of the present invention. As shown in FIG. 13, the retaining member 154 is formed with a shaft portion 154a welded to the rear frame 103f and an annular portion 154b, through inside of which the hose 24 is to extend. An inner diameter D4 (approximately 16 millimeters) of the annular portion 154b of the retaining member 154 is greater than the outer diameter D3 (approximately 9 millimeters) of the hose 24. Hence, the retaining member 154 causes the hose 24, which swings along with swinging movements of the unit swing engine 11 (see FIG. 11), to extend through the inside of the annular portion 154b having the inner diameter D4 greater than the outer diameter D3 of the hose 24, thereby retaining the hose 24 to be movable in the fore-and-aft direction and in the lateral direction. Accordingly, the retaining member 154 restrains the hose 24 from moving toward the unit swing engine 11 and in the lateral direction beyond a predetermined range.

The second embodiment is similar to the first embodiment in configuration except for those described above.

In the second embodiment, as described above, the retaining member 154 that retains the hose 24 at the position below and farther forward than the hose holding claws 26p is provided on the rear frame 103f. Accordingly, the hose 24 can be retained more stably than in a structure that retains the hose 24 only with the plurality of hose holding claws 26p.

In the second embodiment, as described above, the retaining member 154 is constructed to movably retain the hose 24, thereby allowing the hose 24 to move inside the annular member 154b of the retaining member 154 even when the one end of the hose 24 is swung up and down to follow swinging movements of the unit swing engine 11. By virtue of this structure, the retaining member 154 can restrain movements of the hose 24 even when the unit swing engine 11 swings up and down. Consequently, interference between the hose 24 with other components surrounding the unit swing engine 11 is inhibited.

In the second embodiment, as described above, the retaining member 154 is constructed so as to restrain the hose 24 from moving laterally (in the vehicle width direction) beyond the predetermined range. By virtue of this structure, the hose 24 is easily restrained from moving excessively in the vehicle width direction in an area between the hose holding claws 26p and the recovery tank 125.

In the second embodiment, as described above, the retaining member 154 is provided in the vicinity of the front end of the unit swing engine 11 and constructed so as to restrain the hose 24 from moving toward the unit swing engine 11 beyond the predetermined range. Accordingly, the hose 24 is restrained from moving excessively toward the unit swing engine 11. By virtue of this structure, the hose 24 connected with the radiator 23 is restrained from approaching the unit swing engine 11, which is a heat generator, and hence undesirable heating of the coolant in the hose 24 is prevented.

It is to be understood that the embodiments of the invention are disclosed herein simply for exemplary purposes only in all respects, and are not intended in any way to limit the scope of the present invention. The scope of the invention is not defined by the description of the preferred embodiments, but defined by the scope of the claims.

For instance, in the first and second embodiments, a scooter-type motorcycle is adopted as an example of a vehicle. However, the present invention is not limited to this embodiment, and can be applied to any other vehicles each provided with a unit swing engine, a radiator cover, and a hose. Examples of such vehicles include motorcycles other than the scooter type, three-wheel vehicles, and all terrain vehicles (ATV).

The first and second embodiments have described the examples in each of which the hose holding claws are formed integrally with the radiator cover. However, the present invention is not limited thereto, and the hose holding claws and the radiator cover may be provided separately.

The first and second embodiments have described the examples in each of which two pieces of the hose holding claw are provided. However, the present invention is not limited thereto, and one or three or more of the hose holding claws may be provided.

The first and second embodiments have described the examples in each of which a single piece of the retaining member is provided on the rear frame. However, the present invention is not limited thereto, and two or more of the retaining members may be provided on the rear frame. In this case, the hose is more strictly restrained from approaching the unit swing engine.

### Description of Reference Numerals and Symbols

1: motorcycle (vehicle)
3: main frame (frame)
3b, 103b: main pipe (lower frame, upper section of lower frame)
3c, 103c: bottom tube (lower section of lower frame, first portion)
3d, 103d: curved section (second portion)
103f: rear frame (frame)
9: footrest
11: unit swing engine
23: radiator
24: hose
25, 125: recovery tank (sub tank)
26: radiator cover
26p: hose holding claw (first retainer)
26s: hook portion
28: rear wheel
154: retaining member (second retainer)

## Claims

1. A vehicle (1) comprising:
a frame (3) forming part of a vehicle body;
a unit swing engine (11) pivotally attached to the frame (3) ;
a radiator (23) for cooling the unit swing engine (11) ;
a radiator cover (26) disposed so as to cover the radiator (23);
a hose (24) having one end connected to the radiator (23); **characterized in that**
a first retainer (26p) is provided on the radiator cover (26) and adapted to retain the hose (24).

2. The vehicle (1) according to claim 1, wherein the first retainer (26p) and the radiator cover (26) are integrally formed.

3. The vehicle (1) according to claim 1 or 2, wherein a plurality of first retainers (26p) are provided.

4. The vehicle (1) according to claim 3, wherein the plurality of first retainers (26p) are disposed at staggered positions with respect to a direction along which the hose (24) extends.

5. The vehicle (1) according to claim 3 or 4, wherein the plurality of first retainers (26p) are constructed so as to retain the hose (24) by sandwiching the hose (24) therebetween.

6. The vehicle (1) according to any preceding claim, wherein the first retainer (26p) has a shape of a hook having a hook portion (26s) at an upper part thereof; and
the hose (24) is retained in a state of being restrained in vertical movement by the hook portion (26s) of the first retainer (26p) and the radiator cover (26).

7. The vehicle (1) according to any preceding claim, further comprising a second retainer (154) provided on the frame (3), the second retainer (154) retaining the hose (24) at a position different from that of the first retainer (26p).

8. The vehicle (1) according to claim 7, wherein the second retainer (154) is constructed so as to movably retain the hose (24).

9. The vehicle (1) according to claim 7 or 8, wherein the second retainer (154) is constructed so as to restrain movement of the hose (24) in a vehicle width direction.

10. The vehicle (1) according to claim 7, 8 or 9, wherein the second retainer (154) is provided in a vicinity of the engine (11) and is constructed so as to restrain movement of the hose (24) in a direction toward the engine (11).

11. The vehicle (1) according to any preceding claim, further comprising:
a footrest (9) disposed in front of the engine (11) for supporting feet of a user placed thereon and extending in a fore-and-aft direction; and
a sub tank (25) disposed in a vicinity of a front end of the footrest (9), connected to the other end of the hose (24), one end of which is connected to the radiator (23), and receiving coolant flowing thereinto from the radiator (23) through the hose (24).

12. The vehicle (1) according to claim 11, wherein the frame (3) extends downward and rearward and includes a lower frame (3b) having an upper section and a lower section; and
the sub tank (25) is disposed forward of the lower section of the lower frame (3b).

13. The vehicle (1) according to claim 12, wherein the lower section of the lower frame (3b) has a first portion disposed below the footrest (9) and a second portion connected to the first portion, the second portion extending upward and forward from the first portion and connected to the upper section of the lower frame (3b); and
the sub tank (25) is disposed in a vicinity of the second portion of the lower frame (3b).

14. A radiator cover (26) for covering a radiator (23) mounted on a vehicle (1), said radiator (23) for cooling a unit swing engine (11) which is pivotally mounted on a vehicle frame (3), said cover (26) comprising a first retainer (26p) adapted to retain a hose (24) having one end connected to the radiator (23).

## Patentansprüche

1. Fahrzeug (1), das aufweist:
einen Rahmen (3), der einen Teil einer Fahrzeugkarosserie bildet;
einen Einheitsschwingmotor (11), der drehbar am Rahmen (3) befestigt ist;
einen Kühler (23) für das Kühlen des Einheitsschwingmotors (11);
eine Kühlerabdeckung (26), die so angeordnet ist, dass sie den Kühler (23) bedeckt;
einen Schlauch (24), bei dem ein Ende mit dem Kühler (23) verbunden ist;
**dadurch gekennzeichnet, dass**
ein erstes Halteelement (26p) an der Kühlerabdeckung (26) vorhanden und ausgebildet ist, um den Schlauch (24) zu halten.

2. Fahrzeug (1) nach Anspruch 1, bei dem das erste Halteelement (26p) und die Kühlerabdeckung (26) zusammenhängend ausgebildet sind.

3. Fahrzeug (1) nach Anspruch 1 oder 2, bei dem eine Vielzahl von ersten Halteelementen (26p) vorhanden ist.

4. Fahrzeug (1) nach Anspruch 3, bei dem die Vielzahl der ersten Halteelemente (26p) in versetzten Positionen mit Bezugnahme auf eine Richtung angeordnet ist, in der sich der Schlauch (24) erstreckt.

5. Fahrzeug (1) nach Anspruch 3 oder 4, bei dem die Vielzahl der ersten Halteelemente (26p) so konstruiert ist, dass der Schlauch (24) gehalten wird, indem der Schlauch (24) dazwischengeschoben wird.

6. Fahrzeug (1) nach einem der vorhergehenden Ansprüche, bei dem das erste Halteelement (26p) eine Form eines Hakens aufweist, der einen Hakenabschnitt (26s) an einem oberen Teil davon aufweist; und
bei dem der Schlauch (24) in einem Zustand der eingeschränkten vertikalen Bewegung mittels des Hakenabschnittes (26s) des ersten Halteelementes (26p) und der Kühlerabdeckung (26) gehalten wird.

7. Fahrzeug (1) nach einem der vorhergehenden Ansprüche, das außerdem ein zweites Halteelement (154) aufweist, das am Rahmen (3) vorhanden ist, wobei das zweite Halteelement (154) den Schlauch (24) in einer Position hält, die von der des ersten Halteelementes (26p) abweichend ist.

8. Fahrzeug (1) nach Anspruch 7, bei dem das zweite Halteelement (154) so konstruiert ist, dass es den Schlauch (24) beweglich hält.

9. Fahrzeug (1) nach Anspruch 7 oder 8, bei dem das zweite Halteelement (154) so konstruiert ist, dass es die Bewegung des Schlauches (24) in einer Breitenrichtung des Fahrzeuges einschränkt.

10. Fahrzeug (1) nach Anspruch 7, 8 oder 9, bei dem das zweite Halteelement (154) in der Nähe des Motors (11) vorhanden und so konstruiert ist, dass die Bewegung des Schlauches (24) in einer Richtung zum Motor (11) hin eingeschränkt wird.

11. Fahrzeug (1) nach einem der vorhergehenden Ansprüche, das außerdem aufweist:
eine Fußstütze (9), die vor dem Motor (11) für das Aufnehmen der Füße eines darauf befindlichen Benutzers angeordnet ist und sich in einer Längsrichtung erstreckt; und
einen Teiltank (25), der in der Nähe eines vorderen Endes der Fußstütze (9) angeordnet ist, verbunden mit dem anderen Ende des Schlauches (24), wobei ein Ende davon mit dem Kühler (23) verbunden ist, und der ein Kühlmittel aufnimmt, das in diesen vom Kühler (23) durch den Schlauch (24) fließt.

12. Fahrzeug (1) nach Anspruch 11, bei dem sich der Rahmen (3) nach unten und nach hinten erstreckt und einen unteren Rahmen (3b) mit einem oberen Abschnitt und einem unteren Abschnitt umfasst; und
der Teiltank (25) nach vorn vom unteren Abschnitt des unteren Rahmens (3b) angeordnet ist.

13. Fahrzeug (1) nach Anspruch 12, bei dem der untere Abschnitt des unteren Rahmens (3b) einen ersten Teil, der unterhalb der Fußstütze (9) angeordnet ist, und einen zweiten Teil aufweist, der mit dem ersten Teil verbunden ist, wobei sich der zweite Teil nach oben und nach vorn vom ersten Teil erstreckt und mit dem oberen Abschnitt des unteren Rahmens (3b) verbunden ist; und
der Teiltank (25) in der Nähe des zweiten Teils des unteren Rahmens (3b) angeordnet ist.

14. Kühlerabdeckung (26) für das Abdecken eines Kühlers (23), der an einem Fahrzeug (1) montiert ist, wobei der Kühler (23) für das Kühlen eines Einheitsschwingmotors (11) vorhanden ist, der drehbar an einem Fahrzeugrahmen (3) montiert ist, wobei die Abdeckung (26) ein erstes Halteelement (26p) aufweist, das ausgebildet ist, um einen Schlauch (24) zu halten, der ein Ende verbunden mit dem Kühler (23) aufweist.

## Revendications

1. Véhicule (1) comprenant:
un cadre (3) faisant partie d'une carrosserie de véhicule;
un moteur oscillant (11) fixé de manière pivotante sur le cadre (3);
un radiateur (23) pour le refroidissement du moteur oscillant (11);
un couvercle de radiateur (26) disposé de manière à couvrir le radiateur (23);
un tuyau (24) ayant une extrémité connectée au radiateur (23);
**caractérisé par le fait qu'**un premier élément de retenue (26p) est prévu sur le couvercle de radiateur (26) et adapté pour retenir le tuyau (24).

2. Véhicule (1) selon la revendication 1, dans lequel le premier élément de retenue (26p) et le couvercle de radiateur (26) sont solidaires.

3. Véhicule (1) selon la revendication 1 ou 2, dans lequel une pluralité de premiers éléments de retenue (26p) est prévue.

4. Véhicule (1) selon la revendication 3, dans lequel la pluralité de premiers éléments de retenue (26p) est disposée en des positions en quinconce par rapport à une direction dans laquelle le tuyau (24) s'étend.

5. Véhicule (1) selon la revendication 3 ou 4, dans lequel la pluralité de premiers éléments de retenue (26p) est construite de manière à retenir le tuyau (24) en le serrant en sandwich entre eux.

6. Véhicule (1) selon l'une quelconque des revendications précédentes, dans lequel le premier élément de retenue (26p) a la forme d'un crochet possédant une partie de crochet (26s) au niveau de sa partie supérieure; et
le tuyau est maintenu dans un état tel que son mouvement vertical est limité par la partie de crochet (26s) du premier élément de retenue (26p) et le couvercle de radiateur (26).

7. Véhicule (1) selon l'une quelconque des revendications précédentes, comprenant, en outre, un second élément de retenue (154) prévu sur le cadre (3), le second élément de retenue (154) maintenant le tuyau (24) à une position différente de celle du premier élément de retenue (26p).

8. Véhicule (1) selon la revendication 7, dans lequel le second élément de retenue (154) est construit de manière à maintenir le tuyau (24) de manière mobile.

9. Véhicule (1) selon la revendication 7 ou 8, dans lequel le second élément de retenue (154) est construit de manière à limiter le mouvement du tuyau (24) dans le sens de la largeur d'un véhicule.

10. Véhicule (1) selon la revendication 7, 8 ou 9, dans lequel le second élément de retenue (154) est prévu au voisinage du moteur (11) et est construit de manière à limiter le mouvement du tuyau (24) dans une direction allant vers le moteur (11).

11. Véhicule (1) selon l'une quelconque des revendications précédentes, comprenant, en outre:
un repose-pieds (9) disposé devant le moteur (11) pour supporter les pieds d'un utilisateur posés dessus et s'étendant dans une direction de l'avant vers l'arrière; et
un réservoir secondaire (25) disposé au voisinage d'une extrémité antérieure du repose-pieds (9), connecté à l'autre extrémité du tuyau (24) dont une extrémité est connectée au radiateur (23), et recevant un liquide de refroidissement provenant du radiateur (23) et s'écoulant dans le réservoir à travers le tuyau (24).

12. Véhicule (1) selon la revendication 11, dans lequel le cadre (3) s'étend vers le bas et vers l'arrière et inclut un cadre inférieur (3b) présentant une partie supérieure et une partie inférieure; et
le réservoir secondaire (25) est disposé en avant de la partie inférieure du cadre inférieur (3b).

13. Véhicule (1) selon la revendication 12, dans lequel la partie inférieure du cadre inférieur (3b) comprend une première partie disposée au-dessous du repose-pieds (9) et une seconde partie reliée à la première partie, la seconde partie s'étendant vers le haut et vers l'avant à partir de la première partie et étant reliée à la partie supérieure du cadre inférieur (3b); et
le réservoir secondaire (25) est disposé au voisinage de la seconde partie du cadre inférieur (3b).

14. Couvercle de radiateur (26) pour couvrir un radiateur (23) monté sur un véhicule (1), ledit radiateur (23) servant au refroidissement d'un moteur oscillant (11) qui est monté de manière pivotante sur un cadre de véhicule (3), ledit couvercle (26) comprenant un premier élément de retenue (26p) adapté pour maintenir un tuyau (24) ayant une extrémité connectée au radiateur (23).
